# EUROPEAN PATENT SPECIFICATION

(11) **EP 2 778 527 B1**
(45) Date of publication and mention of the grant of the patent: **02.01.2019**
(21) Application number: 14157854.2
(22) Date of filing: 05.03.2014
(51) Int. Cl.: F23N 1/00

(54) **Gas flow control device for a gas stove**
Gasflusssteuerungsvorrichtung für Gasherd
Dispositif de commande d'écoulement de gaz pour cuisinière à gaz

(30) Priority: 13.03.2013 CN 201310080203
(43) Date of publication of application: 17.09.2014
(73) Proprietor: BSH Hausgeräte GmbH, 81739 München (DE)
(72) Inventor: Kafali, Zeki, Nanjing (CN); Li, Xingzhou, 210000 Nanjing City (CN); Luo, Haitao, Nanjing Jiangsu 210028 (CN); Wu, Jinhua, 210000 Nanjing (CN)

(56) References cited:
- EP-A1- 0 467 901
- WO-A1-91/14136
- WO-A1-99/11956
- BE-A1- 773 360
- CN-U- 201 443 621
- FR-A1- 2 416 424
- US-A- 3 692 038
- US-A- 3 771 761
- US-A1- 2003 102 025
- US-A1- 2007 000 302
- US-A1- 2008 076 079

## Description

### Field of the Invention

The present invention relates to the field of gas stoves, and more particularly to the field of gas flow control technologies of gas stoves.

### Related Art

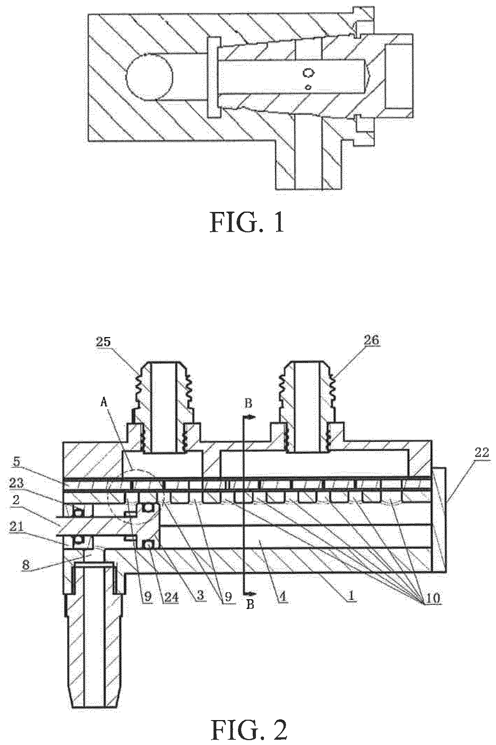

A gas stove generally uses a stopcock, and a structure of a typical stopcock is shown in FIG. 1. The volume of the stopcock is small, so that the number of holes provided on a spool is limited, which limits the number of levels. It can be said that the foregoing technical problem severely restricts the development of the gas stove.

FR 2 416 424 A1 describes a gas valve for a gas burner. The gas valve comprises a valve body with a gas inlet and a gas outlet. A piston is arranged in a cavity of the valve body. The piston is arranged axially displaceable in the cavity.

US 2008/0076079 A1 describes a gas valve. The gas valve comprises a valve body with a gas inlet and a gas outlet. A piston is arranged in a cavity of the valve body. The piston is arranged axially displaceable in the cavity.

US 2003/0102025 A1 describes a control valve for a gas appliance. The control valve comprises a gas valve body with a valve means that can be rotated and displaced axially in the valve body.

US 2007/0000302 A1 describes a method for testing the function of a hydraulic valve and a test stand for carrying out the method. A pressurized gaseous medium is used as a test medium.

WO 99/11956 A1 describes a gas burner with concentric ring burners. The gas burner is supplied with gas/air mixture via individual conduits. Each conduit is supplied with gas from a manifold having a low volume via individual valves. These are controlled by a horizontal sliding linear cam acting on cam followers on each valve.

CN 201443621 U describes a plunger-type gas regulating valve comprising a valve body and a valve core, wherein the valve body is provided with a gas inlet, a big-fire gas outlet and a tinder gas outlet and the valve core penetrates out of the valve body.

Unless supported by sufficient evidences, the prior art described herein does not mean that it is known to those of ordinary skill in the art before the filing date of this application.

### SUMMARY OF THE INVENTION

The main objective of the present invention is to provide a novel gas stove and a gas flow control device thereof to solve the foregoing problem.

A gas flow control device for a gas stove provided by the present invention includes a drive device, a valve body, and a piston portion; the valve body includes an inner cavity, a gas inlet, and at least one gas outlet, and the gas inlet and the gas outlet are separately in communication with the inner cavity; the piston portion is placed in the inner cavity; and the drive device is used to control a position of the piston portion in the inner cavity, so as to control whether the gas outlet is in communication with gas in the inner cavity and/or to control a degree at which the gas outlet is in communication with the gas in the inner cavity (4), wherein the gas outlet comprises at least two first gas outlets and at least two second gas outlets; the first gas outlets together supply gas to an inner-ring fire cover; and the second gas outlets together supply gas to an outer-ring fire cover, wherein the gas flow control device further includes a first gas gathering member, a second gas gathering member and a gas gathering upper cover provided with a first gas gathering cavity and a second gas gathering cavity, wherein the first gas gathering cavity is used to gather the gas that flows out from the first gas outlets, and further deliver the gas to the first gas gathering member which supplies the gas to the inner-ring fire cover, wherein the second gas gathering cavity is sued to gather the gas that flows out from the second gas outlets, and further deliver the gas to the second gas gathering member which supplies the gas to the outer-ring fire cover. The gas inlet is used to supply the gas to the inner cavity. The present invention provides a whole new gas flow control scheme for a gas stove. By adopting the technical solution, the number of levels of the gas stove can be easily increased.

Optionally, the drive device includes a valve stem; and the valve stem is connected to the piston portion.

Optionally, the drive device further includes a linear motor; and the valve stem is connected to the linear motor.

Optionally, the drive device further includes a motor and a conversion device; the valve stem is connected to the conversion device; and the conversion device is used to convert rotary motion of the motor into rectilinear motion, so as to drive the valve stem to perform rectilinear motion.

Optionally, the motor includes a shaft; the conversion device includes a pinion and a rack that are engaged with each other; the pinion is connected to the shaft; and the rack is connected to the valve stem.

Optionally, the motor includes a shaft; the conversion device includes a cam; and the cam is connected to the shaft.

Optionally, a side wall, surrounding the shaft, of the cam is provided with a guide rail portion; and one end of the valve stem is pressed against a bottom wall of the guide rail portion, and the end is embedded in and fixed on the guide rail portion.

Optionally, a projection of the bottom wall of the guide rail portion on a plane perpendicular to the shaft is at least partially of the structure of a logarithmic spiral or the structure of a curve.

Optionally, the cam is an eccentric wheel.

Optionally, the conversion device includes a crank and a slider.

Optionally, one end, contacting the piston portion, of the gas outlet is provided with a chamfer. In this way, wear of the piston portion and the gas outlet caused by friction between the piston portion and the gas outlet can be alleviated.

Optionally, the inner cavity is of a cylindrical structure.

Optionally, the gas inlet is located at one end of the inner cavity.

The gas outlet includes at least two first gas outlets and at least two second gas outlets; the first gas outlets together supply gas to an inner-ring fire cover; and the second gas outlets together supply gas to an outer-ring fire cover.

Optionally, the first gas outlets are disposed successively along an extension direction of the inner cavity; the second gas outlets are disposed successively along the extension direction of the inner cavity; and the first gas outlets are closer to the gas inlet than the second gas outlets.

Optionally, the gas flow control device includes two piston portions; the valve body includes two inner cavities, and the two piston portions correspond to the two inner cavities respectively; each first gas outlet is in communication with one of the inner cavities, and each second gas outlet is in communication with the other inner cavity; and the drive device is used to control positions of the two piston portions in the corresponding inner cavities thereof respectively.

Optionally, the number of the first gas outlets is 3, 4, 5, or 6; and the number of the second gas outlets is 3, 4, 5, or 6.

Optionally, the valve body is of a composite structure.

The gas flow control device further includes a replaceable flow adjustment member; the flow adjustment member is provided with flow adjustment holes corresponding to the gas outlets respectively; and the flow adjustment hole is used to adjust the flow of gas flowing out from the gas outlet corresponding to the flow adjustment hole. For a different gas source, a flow adjustment member provided with a flow adjustment hole with a different inner diameter may be used, so that the gas flow control device can be compatible with different gas sources.

Optionally, the gas flow control device further includes a flow adjustment screw used to adjust the flow of gas flowing out from the gas outlet. In this way, the gas flow control device can be compatible with different gas sources. The present invention provides a whole new gas flow control scheme for a gas stove. By adopting the technical solution, the number of levels of the gas stove can be easily increased.

The foregoing content of the present invention is not intended to describe all possible embodiments of the present invention. In the whole application, guidance is provided through examples, and the examples may be used in various feasible combinations.

### BRIEF DESCRIPTION OF THE DRAWINGS

The accompanying drawings in the following are only intended to illustrate and explain the present invention in an exemplary manner, but are not intended to limit the scope of the present invention, where:
FIG. 1 is a schematic structural view of an existing stopcock;
FIG. 2 is a sectional view of Embodiment 1 of a gas flow control device for a gas stove according to the present invention;
FIG. 3 is a partially enlarged view of a position A in FIG. 2;
FIG. 4 is a sectional view along a line B-B in FIG. 2;
FIG. 5 is an exploded view of Embodiment 1 of a gas flow control device for a gas stove according to the present invention;
FIG. 6 is a schematic structural view of a drive device of Embodiment 1 of a gas flow control device for a gas stove according to the present invention;
FIG. 7 is a schematic structural view of a drive device of Embodiment 2 of a gas flow control device for a gas stove according to the present invention;
FIG. 8 is a schematic structural view of a drive device of Embodiment 3 of a gas flow control device for a gas stove according to the present invention; and
FIG. 9 is a sectional view of Embodiment 4 of a gas flow control device for a gas stove not part of the present invention.

### List of reference numerals:

1 Valve body, 2 Valve stem, 3 Piston portion, 4 Inner cavity, 5 Flow adjustment member, 6 Flow adjustment hole, 7 Flow adjustment screw, 8 Gas inlet, 9 First gas outlet, 10 Second gas outlet, 11 Motor, 12 Shaft, 13 Pinion, 14 Rack, 15 Cam, 16 Guide rail portion, 17 Bottom wall of the guide rail portion, 18 Sealing strip, 19 First sealing member, 20 Second sealing member, 21 First sealing block, 22 Second sealing block, 23 First sealing ring, 24 Second sealing ring, 25 First gas gathering member, 26 Second gas gathering member

### DETAILED DESCRIPTION OF THE INVENTION

In order to make the objectives, solutions, and beneficial effects of the present invention more comprehensible, the present invention is further described in the following with reference to the accompanying drawings and possible embodiments. It should be noted first that, in the detailed description of the possible embodiments in the following, same or similar features have same reference numerals.

### Embodiment 1

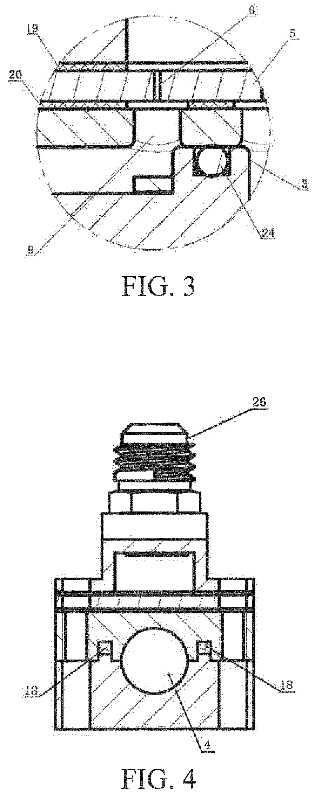

An embodiment of a gas flow control device for a gas stove provided by the present invention is shown in FIG. 2 to FIG. 6 (a motor and a conversion device are not shown in the drawings). It should be noted that, FIG. 4 is a sectional view obtained by cutting a complete gas flow control device along a line B-B in FIG. 2.

The gas flow control device for a gas stove includes a drive device, a valve body 1, and a piston portion 3.

The valve body 1 is of a composite structure. Specifically, the valve body 1 includes a valve body upper portion and a valve body lower portion. When the valve body upper portion and the valve body lower portion are assembled together, two sealing strips 18 are sandwiched between the valve body upper portion and the valve body lower portion. The valve body 1 includes an inner cavity 4 being of a cylindrical structure, a gas inlet 8, and nine gas outlets, and the gas inlet 8 and the nine gas outlets are separately in communication with the inner cavity 4. The piston portion 3 is placed in the inner cavity 4. The gas inlet 8 is located at a left end of the inner cavity 4. The nine gas outlets are formed by three first gas outlets 9 and six second gas outlets 10. The three first gas outlets 9 together supply gas to an inner-ring fire cover of a burner. The nine second gas outlets 10 together supply gas to an outer-ring fire cover of the burner. The first gas outlets 9 are disposed successively along an extension direction of the inner cavity 4. The second gas outlets 10 are also disposed successively along the extension direction of the inner cavity 4. Any first gas outlet 9 is closer to the gas inlet 8 than all the second gas outlets 10. A left side of the inner cavity 4 is provided with a first sealing block 21, and a right side of the inner cavity 4 is provided with a second sealing block 22, so that the gas can flow into the inner cavity 4 only through the gas inlet 8, and the gas that flows into the inner cavity 4 can flow out only through the first gas outlets 9 and/or the second gas outlets 10. A valve stem 2 runs through the first sealing block 21, the first sealing block 21 is provided with a first sealing ring 23, and the first sealing ring 23 is disposed to surround the valve stem 2.

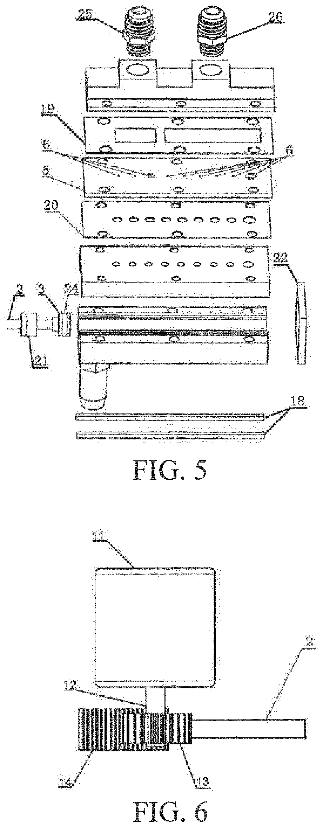

The drive device is used to control a position of the piston portion 3 in the inner cavity 4, so as to control whether the gas outlets are in communication with the gas in the inner cavity 4. Specifically, the drive device includes the valve stem 2, the motor 11, and the conversion device. One end of the valve stem 2 is connected to the conversion device, and the other end of the valve stem 2 is connected to the piston portion 3. The conversion device is used to convert rotary motion of the motor 11 into rectilinear motion, so as to drive the valve stem 2 to perform rectilinear motion. As shown in FIG. 6, the motor 11 includes a motor body and a shaft 12. The motor 11 is a stepper motor. The conversion device includes a pinion 13 and a rack 14 that are engaged with each other. The pinion 13 is connected to the shaft 12. Specifically, the shaft 12 runs through a hole at the axis of the pinion 13, so as to be fixed together with the pinion 13. The rack 14 is connected to the valve stem 2. Specifically, after the motor 11 is started, the shaft 12 rotates to drive the pinion 13 to rotate, the pinion 13 further drives the rack 14 to move, the rack 14 drives the valve stem 2 to perform rectilinear motion, and the valve stem 2 further drives the piston portion 3 to move along the extension direction of the inner cavity 4. The motor 11 can drive the shaft 12 to rotate forward, and can also drive the shaft 12 to rotate reversely, so that the piston portion 3 can move in the inner cavity 4 in a reciprocating manner, so as to flexibly perform level adjustment.

A side wall of the piston portion 3 is provided with a groove, and a second sealing ring 24 is embedded in the groove. The side wall of the piston portion 3 is hermetically pressed against a longitudinal wall body defining the inner cavity 4. For each gas outlet, one end, contacting the side wall of the piston portion 3, of the gas outlet is provided with a chamfer. When the piston portion 3 is located in a certain position in the inner cavity 4, gas flows into the inner cavity 4 on a left side of the piston portion 3 (the gas comes from the gas inlet 8), and the gas does not flow into the inner cavity 4 on a right side of the piston portion 3. Therefore, the gas outlet on the left side of the piston portion 3 is in communication with the gas in the inner cavity 4 on the left side of the piston portion 3, that is, the gas flows out from the gas outlet on the left side of the piston portion 3. However, no gas flows out from the gas outlet on the right side of the piston portion 3. As shown in FIG. 2 and FIG. 3, when the piston portion 3 is located in a position shown in the drawings, only one first gas outlet 9 is on the left side of the piston portion 3, only the first gas outlet 9 is in communication with the gas in the inner cavity 4, and the gas flows out from only the first gas outlet 9; no gas flows out from any one of the other two first gas outlets 9 or any one of the six second gas outlets 10; at the moment, the gas stove is at a minimum power level, and only a small amount of gas flows to the inner-ring fire cover.

The gas flow control device for a gas stove further includes a replaceable flow adjustment member 5, and as shown in FIG. 2, FIG. 3, and FIG. 5, the flow adjustment member 5 is in the shape of a sheet. The flow adjustment member 5 is provided with flow adjustment holes 6 corresponding to the gas outlets respectively. The flow adjustment hole 6 is used to adjust the flow of the gas flowing out from the gas outlet corresponding to the flow adjustment hole 6. It should be noted that, when the piston portion 3 is located at a right end of the inner cavity 4, the three first gas outlets 9 and the six second gas outlets 10 are all in communication with the gas in the inner cavity 4, and at the moment, the inner-ring fire cover and the outer-ring fire cover are both in a maximum power state, that is, the gas stove is at a maximum power level.

The gas flow control device for a gas stove further includes a first gas gathering member 25, a second gas gathering member 26, and a gas gathering upper cover, as shown in FIG. 2 and FIG. 5. The first gas gathering member 25 and the second gas gathering member 26 are both mounted and fixed on the gas gathering upper cover. The gas gathering upper cover is provided with a first gas gathering cavity and a second gas gathering cavity. The first gas gathering cavity is used to gather the gas that flows out from the first gas outlets 9, and further deliver the gas to the first gas gathering member 25. The first gas gathering member 25 further supplies the gas to the inner-ring fire cover. The second gas gathering cavity is used to gather the gas that flows out from the second gas outlets 10, and further deliver the gas to the second gas gathering member 26. The second gas gathering member 26 further supplies the gas to the outer-ring fire cover.

A first sealing member 19 is disposed between the flow adjustment member 5 and the gas gathering upper cover, and a second sealing member 20 is disposed between the flow adjustment member 5 and the valve body upper portion.

The foregoing is only a possible embodiment of the present invention, and other embodiments may be obtained by modifying, replacing, or adding some technical features. For example, the drive device may also directly adopt a structure combining a linear motor and the valve stem, the valve stem is connected to the linear motor, and in this way, the conversion device is no longer needed. For another example, the conversion device may also be a crank and a slider. For another example, it may be that: the first gas outlet is used to supply the gas to the outer-ring fire cover, and the second gas outlet is used to supply the gas to the inner-ring fire cover. For another example, the drive device may be further used to control the position of the piston portion in the inner cavity, to control a degree at which the gas outlet is in communication with the gas in the inner cavity, that is, the degree, at which each gas outlet in communication with the gas in the inner cavity, is adjustable, so as to adjust the flow of the gas flowing to the burner. For example, the number of the first gas outlets may be two, four, five, six, or larger; the number of the second gas outlets may be two, three, four, five, seven, or larger. For another example, it may be that the first gas outlets and the second gas outlets are disposed along the extension direction of the inner cavity in a staggered manner. For another example, the gas inlet may also be located at a right end or other feasible positions of the inner cavity.

### Embodiment 2

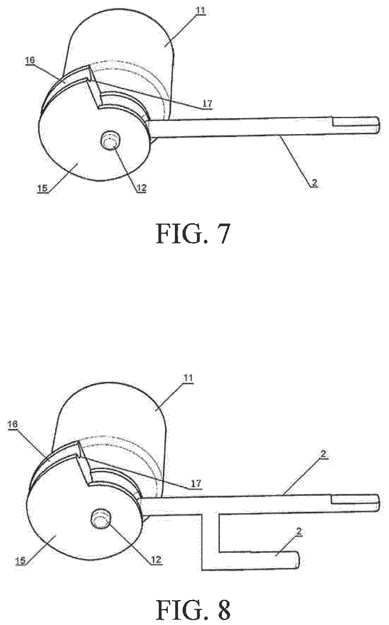

The present invention further provides another embodiment of the gas flow control device for a gas stove, which is obtained through further improvement based on Embodiment 1, and a difference between this embodiment and Embodiment 1 only lies in that: specific structures of the conversion devices are different. A fitting relationship between a drive device and a valve stem 2 in this embodiment is schematically shown in FIG. 7. For brevity, structural features of this embodiment, which are the same as or similar to those of Embodiment 1, are not described herein in detail again, and reference may be made to the corresponding descriptions and accompanying drawings of Embodiment 1.

The drive device of the embodiment of the gas flow control device for a gas stove includes the valve stem 2, a motor 11, and the conversion device. The motor 11 includes a motor body and a shaft 12. The conversion device includes a cam 15; the cam 15 is connected to and fixed together with the shaft 12, and specifically, the shaft 12 runs through the cam 15 in a thickness direction of the cam 15. A side wall, surrounding the shaft 12, of the cam 15 is provided with a guide rail portion 16. A projection of a bottom wall 17 of the guide rail portion 16 on a plane perpendicular to the shaft 12 is of the structure of a logarithmic spiral, and the shaft 12 is located at an origin of the logarithmic spiral. One end of the valve stem 2 is pressed against the bottom wall 17 of the guide rail portion 16, the end of the valve stem 2 is embedded in and fixed on the guide rail portion 16 (therefore in a working state, the end of the valve stem 2 cannot withdraw from the guide rail portion 16), and the other end of the valve stem 2 is connected to the piston portion 3.

The conversion device is used to convert rotary motion of the motor 11 into rectilinear motion, so as to drive the valve stem 2 to perform rectilinear motion. Specifically, distances from points on the bottom wall 17 of the guide rail portion 16 to the shaft 12 are different from each other, and are progressive, so that when the motor 11 rotates, the shaft 12 drives the cam 15 to rotate, the cam 15 further pushes or pulls the valve stem 2 to perform rectilinear movement, and the valve stem 2 further drives the piston portion 3 to move, so as to adjust the position of the piston portion 3 in the inner cavity 4.

The foregoing is only a possible embodiment of the present invention, and other embodiments may be obtained by modifying or replacing some technical features. For example, the cam may also be an eccentric wheel. For another example, the projection of the bottom wall of the guide rail portion on the plane perpendicular to the shaft may be at least partially of the structure of a curve.

### Embodiment 3

The present invention further provides another embodiment of the gas flow control device for a gas stove, which is obtained through further improvement based on Embodiment 2, and a main difference between this embodiment and Embodiment 2 lies in that: the gas flow control device includes two piston portions 3; a valve body 1 of the gas flow control device includes two inner cavities 4, the two piston portions 3 correspond to the two inner cavities 4 respectively; each first gas outlet 9 is in communication with one of the inner cavities 4, each second gas outlet 10 is in communication with the other one of the inner cavities 4; a drive device of the gas flow control device is used to control positions of the two piston portions 3 in the inner cavities 4 corresponding to the two piston portions 3 respectively.

For brevity, structural features of this embodiment, which are the same as those of Embodiment 2, are not described herein in detail again, and reference may be made to the corresponding descriptions of Embodiment 2.

A fitting relationship between the drive device and the valve stem 2 in this embodiment is schematically shown in FIG. 8. The drive device of the embodiment of the gas flow control device for a gas stove includes the valve stem 2, a motor 11, and a conversion device. The valve stem 2 includes a first end portion disposed at one end and two second end portions disposed at the other end. The motor 11 includes a motor body and a shaft 12. The conversion device includes a cam 15. The cam 15 is connected to and fixed together with the shaft 12, and specifically, the shaft 12 runs through the cam 15 in a thickness direction of the cam 15. A side wall, surrounding the shaft 12, of the cam 15 is provided with a guide rail portion 16. A projection of a bottom wall 17 of the guide rail portion 16 on a plane perpendicular to the shaft 12 is of the structure of a logarithmic spiral, and the shaft 12 is located at an origin of the logarithmic spiral. The first end portion of the valve stem 2 is pressed against the bottom wall 17 of the guide rail portion 16, and the first end portion of the valve stem 2 is embedded in and fixed on the guide rail portion 16 (therefore in a working state, the first end portion of the valve stem 2 cannot withdraw from the guide rail portion 16). The two second end portions are connected to the two piston portions 3 respectively.

The conversion device is used to convert rotary motion of the motor 11 into rectilinear motion, so as to drive the two second end portions to perform rectilinear motion at the same time. The two second end portions further separately drive the piston portions 3 connected to the two second end portions to perform rectilinear motion.

### Embodiment 4

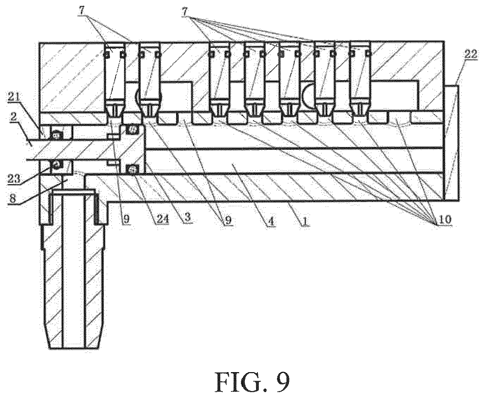

Another embodiment of the gas flow control device for a gas stove, not part of the present invention, which, as shown in FIG. 9, is obtained through further improvement based on Embodiment 1, and a main difference between this embodiment and Embodiment 1 lies in that: the embodiment of the gas flow control device uses a flow adjustment screw 7 to adjust the gas flow. Specifically, the embodiment of the gas flow control device is provided with seven flow adjustment screws 7. Two flow adjustment screws 7 correspond to two first gas outlets 9 on the left side respectively, and the two flow adjustment screws 7 are used to separately adjust the flow of the gas flowing out from the first gas outlets 9 corresponding to the two flow adjustment screws 7. The remaining five flow adjustment screws 7 correspond to five second gas outlets 10 on the left side respectively, and the five flow adjustment screws 7 are used to separately adjust the flow of the gas flowing out from the second gas outlets 10 corresponding to the five flow adjustment screws 7.

The reason why the rightmost first gas outlet 9 and the rightmost second gas outlet 10 are not provided with corresponding flow adjustment screws is that when the rightmost first gas outlet 9 is in communication with the gas in the inner cavity 4, the inner-ring fire cover is at a maximum power level, the flow of the gas flowing to the inner-ring fire cover is controlled by a corresponding nozzle; when the rightmost second gas outlet 10 is in communication with the gas in the inner cavity 4, the outer-ring fire cover is at a maximum power level, and the flow of the gas flowing to the outer-ring fire cover is controlled by a corresponding nozzle.

For brevity, structural features of this embodiment, which are the same as those of Embodiment 1, are not described herein in detail again, and reference may be made to the corresponding descriptions and accompanying drawings of Embodiment 1.

### Embodiment 5

The present invention further provides another embodiment of the gas flow control device for a gas stove, which is obtained through further improvement based on Embodiment 1, and a main difference between this embodiment and Embodiment 1 lies in that: the gas flow control device includes two piston portions (that is, a first piston portion and a second piston portion); a valve body of the gas flow control device includes two inner cavities (that is, a first inner cavity and a second inner cavity), the two piston portions correspond to the two inner cavities respectively; a drive device of the gas flow control device includes a motor, two valve stems (that is, a first valve stem and a second valve stem), and two conversion devices (that is, a first conversion device and a second conversion device). Each first gas outlet is in communication with one of the inner cavities, and each second gas outlet is in communication with the other inner cavity. The drive device is used to control positions of the two piston portions in the corresponding inner cavities thereof respectively.

For brevity, structural features of this embodiment, which are the same as those of Embodiment 1, are not described herein in detail again, and reference may be made to the corresponding descriptions and accompanying drawings of Embodiment 1.

Specifically, the first conversion device is used to convert rotary motion of the motor into rectilinear motion to drive the first valve stem to perform rectilinear motion, and the first valve stem further drives the first piston portion to move, so as to adjust the position of the first piston portion in the first inner cavity; the second conversion device is used to convert the rotary motion of the motor into rectilinear motion to directly drive the second valve stem to perform rectilinear motion, and the second valve stem further drives the second piston portion to move, so as to adjust the position of the second piston portion in the second inner cavity.

### Embodiment 6

The present invention further provides an embodiment of an electronically controlled gas stove, which is provided with the gas flow control device according to any one of Embodiment 1 to Embodiment 5. For brevity, structural features of the gas flow control device are not described herein in detail again, and reference may be made to the corresponding descriptions and accompanying drawings of Embodiment 1 to Embodiment 5.

It should be additionally noted that, the present invention should not be construed as being limited to only the foregoing implementation manners, but should be construed as covering all possible implementations defined by the claims in combination with the content disclosed by the specification. Therefore, any simple amendment, equivalent change, and modification made to the embodiments based on the technical essence of the present invention without departing from the content of the technical solutions of the present invention shall fall within the protection scope of the technical solutions of the present invention. It should be particularly pointed out that any degraded application based on the present invention still falls within the protection scope of the technical solutions of the present invention.

## Claims

1. A gas flow control device for a gas stove, **characterized by** comprising:
a drive device, a valve body (1) and a piston portion (3); wherein the valve body (1) comprises an inner cavity (4), a gas inlet (8), and at least one gas outlet, and the gas inlet (8) and the gas outlet are separately in communication with the inner cavity (4);
the piston portion (3) is placed in the inner cavity (4);
the drive device is used to control a position of the piston portion (3) in the inner cavity (4), so as to control whether the gas outlet is in communication with gas in the inner cavity (4) and/or to control a degree at which the gas outlet is in communication with the gas in the inner cavity (4), **characterised in that** the gas outlet comprises at least two first gas outlets (9) and at least two second gas outlets (10);
the first gas outlets (9) together supply gas to an inner-ring fire cover;
the second gas outlets (10) together supply gas to an outer-ring fire cover; wherein the gas flow control device further includes a first gas gathering member (25), a second gas gathering member (26) and a gas gathering upper cover provided with a first gas gathering cavity and a second gas gathering cavity, wherein the first gas gathering cavity is used to gather the gas that flows out from the first gas outlets (9), and further deliver the gas to the first gas gathering member (25) which supplies the gas to the inner-ring fire cover, wherein the second gas gathering cavity is used to gather the gas that flows out from the second gas outlets (10), and further deliver the gas to the second gas gathering member (26) which supplies the gas to the outer-ring fire cover.

2. The gas flow control device according to claim 1, **characterized in that**:
the drive device comprises a valve stem (2); and
the valve stem (2) is connected to the piston portion (3).

3. The gas flow control device according to claim 2, **characterized in that**:
the drive device further comprises a linear motor (11); and
the valve stem (2) is connected to the linear motor (11).

4. The gas flow control device according to claim 2, **characterized in that**:
the drive device further comprises a motor (11) and a conversion device;
the valve stem (2) is connected to the conversion device; and
the conversion device is used to convert rotary motion of the motor (11) into rectilinear motion, so as to drive the valve stem (2) to perform rectilinear motion.

5. The gas flow control device according to claim 4, **characterized in that**:
the motor (11) comprises a shaft (12);
the conversion device comprises a pinion (13) and a rack (14) that are engaged with each other;
the pinion (13) is connected to the shaft (12); and
the rack (14) is connected to the valve stem (2).

6. The gas flow control device according to claim 4 or 5, **characterized in that**:
the motor (11) comprises a shaft (12);
the conversion device comprises a cam (15); and
the cam (15) is connected to the shaft (12).

7. The gas flow control device according to claim 6, **characterized in that**:
a side wall, surrounding the shaft (12), of the cam (15) is provided with a guide rail portion (16); and
one end of the valve stem (2) is pressed against a bottom wall (17) of the guide rail portion (16), and the end is embedded in and fixed on the guide rail portion (16).

8. The gas flow control device according to claim 7, **characterized in that**:
a projection of the bottom wall (17) of the guide rail portion (16) on a plane perpendicular to the shaft (12) is at least partially of the structure of a logarithmic spiral or the structure of a curve.

9. The gas flow control device according to claim 6, 7 or 8, **characterized in that**:
the cam (15) is an eccentric wheel.

10. The gas flow control device according to any of claims 4 to 9, **characterized in that**:
the conversion device comprises a crank and a slider.

11. The gas flow control device according to any of claims 1 to 10, **characterized in that**:
one end, contacting the piston portion (3), of the gas outlet is provided with a chamfer.

12. The gas flow control device according to any of claims 1 to 11, **characterized in that**:
the inner cavity (4) is of a cylindrical structure.

13. The gas flow control device according to any of claims 1 to 12, **characterized in that**:
the gas inlet (8) is located at one end of the inner cavity (4).

14. The gas flow control device according to any of claims 1 to 13, **characterized in that**:
the first gas outlets (9) are disposed successively along an extension direction of the inner cavity (4);
the second gas outlets (10) are disposed successively along the extension direction of the inner cavity (4); and
the first gas outlets (9) are closer to the gas inlet (8) than the second gas outlets (10).

## Patentansprüche

1. Gasdurchflussregelvorrichtung für einen Gasherd, **dadurch gekennzeichnet, dass** sie Folgendes umfasst:
eine Antriebsvorrichtung, einen Ventilkörper (1) und einen Kolbenabschnitt (3),
wobei
der Ventilkörper (1) einen Innenhohlraum (4), einen Gaseinlass (8) und mindestens einen Gasauslass umfasst und der Gaseinlass (8) und der Gasauslass getrennt mit dem Innenhohlraum (4) verbunden sind,
der Kolbenabschnitt (3) in dem Innenhohlraum (4) angeordnet ist,
die Antriebsvorrichtung zum Regeln einer Position des Kolbenabschnitts (3) in dem Innenhohlraum (4) verwendet wird, so dass geregelt wird, ob der Gasauslass mit Gas in dem Innenhohlraum (4) in Verbindung steht, und/oder geregelt wird, in welchem Maß der Gasauslass mit dem Gas in dem Innenhohlraum (4) in Verbindung steht,
**dadurch gekennzeichnet, dass**:
der Gasauslass mindestens zwei erste Gasauslässe (9) und mindestens zwei zweite Gasauslässe (10) umfasst,
die ersten Gasauslässe (9) zusammen eine Innenring-Flammenabdeckung mit Gas versorgen,
die zweiten Gasauslässe (10) zusammen eine Außenring-Flammenabdeckung mit Gas versorgen,
wobei die Gasdurchflussregelvorrichtung ferner ein erstes Gassammelelement (25), ein zweites Gassammelelement (26) und eine obere Gassammelabdeckung mit einem ersten und einem zweiten Gassammelhohlraum aufweist, wobei der erste Gassammelhohlraum zum Sammeln des aus den ersten Gasauslässen (9) strömenden Gases und ferner zum Leiten des Gases zu dem ersten Gassammelelement (25) verwendet wird, welches die Innenring-Flammenabdeckung mit dem Gas versorgt,
wobei der zweite Gassammelhohlraum zum Sammeln des aus den zweiten Gasauslässen (10) strömenden Gases und ferner zum Leiten des Gases zu dem zweiten Gassammelelement (26) verwendet wird, welches die Außenring-Flammenabdeckung mit dem Gas versorgt.

2. Gasdurchflussregelvorrichtung nach Anspruch 1, **dadurch gekennzeichnet, dass**:
die Antriebsvorrichtung einen Ventilschaft (2) umfasst und
der Ventilschaft (2) mit dem Kolbenabschnitt (3) verbunden ist.

3. Gasdurchflussregelvorrichtung nach Anspruch 2, **dadurch gekennzeichnet, dass**:
die Antriebsvorrichtung ferner einen Linearmotor (11) umfasst und
der Ventilschaft (2) mit dem Linearmotor (11) verbunden ist.

4. Gasdurchflussregelvorrichtung nach Anspruch 2, **dadurch gekennzeichnet, dass**:
die Antriebsvorrichtung ferner einen Motor (11) und eine Umwandlungsvorrichtung umfasst,
der Ventilschaft (2) mit der Umwandlungsvorrichtung verbunden ist und
die Umwandlungsvorrichtung zum Umwandeln einer Drehbewegung des Motors (11) in eine geradlinige Bewegung verwendet wird, damit der Ventilschaft (2) zum Ausführen der geradlinigen Bewegung angetrieben wird.

5. Gasdurchflussregelvorrichtung nach Anspruch 4, **dadurch gekennzeichnet, dass**:
der Motor (11) eine Welle (12) umfasst,
die Umwandlungsvorrichtung ein Zahnrad (13) und eine Zahnstange (14) umfasst, die ineinandergreifen,
das Zahnrad (13) mit der Welle (12) verbunden ist und
die Zahnstange (14) mit dem Ventilschaft (2) verbunden ist.

6. Gasdurchflussregelvorrichtung nach Anspruch 4 oder 5, **dadurch gekennzeichnet, dass**:
der Motor (11) eine Welle (12) umfasst,
die Umwandlungsvorrichtung einen Nocken (15) umfasst und
der Nocken (15) mit der Welle (12) verbunden ist.

7. Gasdurchflussregelvorrichtung nach Anspruch 6, **dadurch gekennzeichnet, dass**:
eine Seitenwand des Nockens (15), die die Welle (12) umgibt, mit einem Führungsschienenabschnitt (16) versehen ist, und
ein Ende des Ventilschafts (2) gegen eine Bodenwand (17) des Führungsschienenabschnitts (16) gedrückt und in den Führungsschienenabschnitt (16) eingebettet und daran fixiert ist.

8. Gasdurchflussregelvorrichtung nach Anspruch 7, **dadurch gekennzeichnet, dass**:
eine Projektion der Bodenwand (17) des Führungsschienenabschnitts (16) in einer senkrecht zu der Welle (12) verlaufenden Ebene zumindest teilweise wie eine logarithmische Spirale oder eine Kurve aufgebaut ist.

9. Gasdurchflussregelvorrichtung nach Anspruch 6, 7 oder 8, **dadurch gekennzeichnet, dass**:
es sich bei dem Nocken (15) um eine Exzenterscheibe handelt.

10. Gasdurchflussregelvorrichtung nach einem der Ansprüche 4 bis 9, **dadurch gekennzeichnet, dass**:
die Umwandlungsvorrichtung eine Kurbel und einen Schieber umfasst.

11. Gasdurchflussregelvorrichtung nach einem der Ansprüche 1 bis 10, **dadurch gekennzeichnet, dass**:
ein Ende des Gasaustritts, das den Kolbenabschnitt (3) berührt, mit einer Fase versehen ist.

12. Gasdurchflussregelvorrichtung nach einem der Ansprüche 1 bis 11, **dadurch gekennzeichnet, dass**:
der Innenhohlraum (4) einen zylinderförmigen Aufbau aufweist.

13. Gasdurchflussregelvorrichtung nach einem der Ansprüche 1 bis 12, **dadurch gekennzeichnet, dass**:
sich der Gaseinlass (8) an einem Ende des Innenhohlraums (4) befindet.

14. Gasdurchflussregelvorrichtung nach einem der Ansprüche 1 bis 13, **dadurch gekennzeichnet, dass**:
die ersten Gasauslässe (9) nacheinander in Richtung einer Verlängerung des Innenhohlraums (4) angeordnet sind,
die zweiten Gasauslässe (10) nacheinander in Richtung der Verlängerung des Innenhohlraums (4) angeordnet sind und
die ersten Gasauslässe (9) näher am Gaseinlass (8) liegen als die zweiten Gasauslässe (10).

## Revendications

1. Dispositif de commande d'écoulement de gaz pour une cuisinière à gaz, **caractérisé en ce qu'**il comprend : un dispositif d'entraînement, un corps de soupape (1) et une partie de piston (3) ; dans lequel le corps de soupape (1) comprend une cavité interne (4), une entrée de gaz (8) et au moins une sortie de gaz, et l'entrée de gaz (8) et la sortie de gaz sont en communication séparée avec la cavité interne (4) ; la partie de piston (3) est positionnée dans la cavité interne (4) ; le dispositif d'entraînement est utilisé afin de contrôler une position de la partie de piston (3) dans la cavité interne (4), de sorte à contrôler si la sortie de gaz est en communication avec du gaz dans la cavité interne (4) et/ou de contrôler un degré auquel la sortie de gaz est en communication avec le gaz dans la cavité interne (4), **caractérisé en ce que** la sortie de gaz comprend au moins deux premières sorties de gaz (9) et au moins deux deuxièmes sorties de gaz (10) ; les premières sorties de gaz (9) fournissant ensemble
du gaz à un premier couvercle de feu de bague intérieure ; les deuxièmes sorties de gaz (10) fournissant ensemble du gaz à un couvercle de feu de bague extérieur ; dans lequel le dispositif de commande d'écoulement de gaz comprend en outre un premier organe collecteur de gaz (25), un deuxième organe collecteur de gaz (26) et un couvercle collecteur de gaz supérieur doté d'une première cavité collectrice de gaz et d'une deuxième cavité collectrice de gaz, dans lequel la première cavité collectrice de gaz est utilisée afin de collecter le gaz s'écoulant des premières sorties de gaz (9), et fournit en outre du gaz au premier organe collecteur de gaz (25) qui fournit du gaz au couvercle de feu de bague intérieure, dans lequel la deuxième cavité collectrice de gaz est utilisée afin de collecter le gaz s'écoulant des deuxièmes sorties de gaz (10) et fournit en outre du gaz au deuxième organe collecteur de gaz (26) qui fournit du gaz au couvercle de feu de bague extérieure.

2. Dispositif de commande d'écoulement de gaz selon la revendication 1, **caractérisé en ce que** : le dispositif d'entraînement comprend une tige de soupape (2) ; et la tige de soupape (2) est reliée à la partie de piston (3).

3. Dispositif de commande d'écoulement de gaz selon la revendication 2, **caractérisé en ce que** : le dispositif d'entraînement comprend en outre un moteur linéaire (11) ; et la tige de soupape (2) est reliée au moteur linéaire (11).

4. Dispositif de commande d'écoulement de gaz selon la revendication 2, **caractérisé en ce que** le dispositif d'entraînement comprend en outre un moteur (11) et un dispositif de conversion ; la tige de soupape (2) est reliée au dispositif de conversion ; et le dispositif de conversion est utilisé afin de convertir le mouvement rotatif du moteur (11) en un mouvement rectiligne, de sorte à entraîner la tige de soupape (2) afin qu'elle décrive un mouvement rectiligne.

5. Dispositif de commande d'écoulement de gaz selon la revendication 4, **caractérisé en ce que** : le moteur (11) comprend un arbre (12) ; le dispositif de conversion comprend un pignon (13) et une crémaillère (14) engrenés l'un dans l'autre ; le pignon (13) est relié à la tige (12) et la crémaillère (14) est reliée à la tige de soupape (2).

6. Dispositif de commande d'écoulement de gaz selon la revendication 4 ou 5, **caractérisé en ce que** : le moteur (11) comprend un arbre (12) ; le dispositif de conversion comprend une came (15) et la came (15) est reliée à l'arbre (12).

7. Dispositif de commande d'écoulement de gaz selon la revendication 6, **caractérisé en ce que** : une paroi latérale, entourant l'arbre (12) de la came (15) est dotée d'une partie de rail de guidage (16) et une extrémité de la tige de soupape (2) est comprimée contre une paroi inférieure (17) de la partie de rail de guidage (16) et l'extrémité est intégrée et fixée sur la partie de rail de guidage (16).

8. Dispositif de commande d'écoulement de gaz selon la revendication 7, **caractérisé en ce que** : une projection de la paroi inférieure (17) de la partie de rail de guidage (16) sur un plan perpendiculaire à l'arbre (12) revêt au moins en partie la structure d'une spirale logarithmique ou la structure d'une courbe.

9. Dispositif de commande d'écoulement de gaz selon la revendication 6, 7 ou 8, **caractérisé en ce que** : la came (15) est une roue excentrique.

10. Dispositif de commande d'écoulement de gaz selon l'une quelconque des revendications 4 à 9, **caractérisé en ce que** : le dispositif de conversion comprend une bielle et une coulisse.

11. Dispositif de commande d'écoulement de gaz selon l'une quelconque des revendications 1 à 10, **caractérisé en ce que** : une extrémité de la sortie de gaz en contact avec la partie de piston (3) est dotée d'un chanfrein.

12. Dispositif de commande d'écoulement de gaz selon l'une quelconque des revendications 1 à 11, **caractérisé en ce que** : la cavité interne (4) est une structure cylindrique.

13. Dispositif de commande d'écoulement de gaz selon l'une quelconque des revendications 1 à 12, **caractérisé en ce que** : l'entrée de gaz (8) est située en une extrémité de la cavité interne (4).

14. Dispositif de commande d'écoulement de gaz selon l'une quelconque des revendications 1 à 13, **caractérisé en ce que** : les premières sorties de gaz (9) sont disposées successivement le long d'une direction d'extension de la cavité interne (4) ; les deuxièmes sorties de gaz (10) sont disposées successivement le long de la direction d'extension de la cavité interne (4) et les premières sorties de gaz (9) sont plus proches de l'entrée de gaz (8) que les deuxièmes sorties de gaz (10).
